Europäisches Patentamt

European Patent Office

Office européen des brevets

(11) Veröffentlichungsnummer: **0 223 951**
**B1**

(12) **EUROPÄISCHE PATENTSCHRIFT**

(45) Veröffentlichungstag der Patentschrift: **19.12.90**

(21) Anmeldenummer: **86112746.2**

(22) Anmeldetag: **16.09.86**

(51) Int. Cl.⁵: **A 01 D 43/10, A 01 D 43/00**

(54) Mähmaschine.

(30) Priorität: **28.11.85 DE 3542125**

(43) Veröffentlichungstag der Anmeldung:
**03.06.87 Patentblatt 87/23**

(45) Bekanntmachung des Hinweises auf die
Patenterteilung:
**19.12.90 Patentblatt 90/51**

(84) Benannte Vertragsstaaten:
**AT CH DE FR GB IT LI NL**

(56) Entgegenhaltungen:
**EP-A-0 116 660**
**AT-B- 263 432**
**DE-A-2 131 598**

(73) Patentinhaber: **GREENLAND GMBH & CO. KG**
**Erwin-Dietrich-Platz 1**
**D-7702 Gottmadingen (DE)**

(72) Erfinder: **Maier, Martin**
**Hilzingerstrasse 23**
**D-7702 Gottmadingen (DE)**
Erfinder: **Preyss, Ulrich**
**Gundekarstrasse 61**
**D-8501 Feucht/Nürnb. (DE)**

(74) Vertreter: **Patentanwälte Grünecker, Kinkeldey,**
**Stockmair & Partner**
**Maximilianstrasse 58**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Mähmaschine der im Oberbegriff des Patentanspruchs 1 angegebenen Art.

Bei einer aus der DE—A1—21 31 598 bekannten Mähvorrichtung dieser Art ist die Konditioniereinrichtung mit ihren Befestigungsteilen in fest installierten Lagern an nach hinten weisenden Auslegern des Tragbalkens gehaltert. In der Praxis dienen zur Anbringung der Konditioniereinrichtung Schraubverbindungen. Es ist in der Praxis nicht immer erforderlich, das Futter mittels der Konditioniereinrichtung aufzubereiten. Beim täglichen Grünfutterholen wird das Futter nur in einem Schwad gebraucht und ohne Aufbereitung von einem Ladewagen aufgenommen. Die Konditioniereinrichtung läßt sich für diesen Fall abmontieren. An ihrer Stelle wird in den Lagern eine Schwadformungseinrichtung gehaltert. Diese Umstellarbeiten der Mähmaschine sind zeitaufwendig und mühsam.

Bei einer aus der AT—A2—26 34 32 bekannten Mähmaschine sind die Konditioniereinrichtung und eine dieser nachgesetzte Schwadformungseinrichtung jeweils für sich fest angebracht.

Bei einer aus der EP—A1—01 16 660 bekannten Mähmaschine ist an einem Hauptrahmen, der die Mähwerke beweglich abstützt, in Fahrtrichtung hinter dem Hauptrahmen eine Konditioniereinrichtung hochschwenkbar angeordnet. Die Konditioniereinrichtung wird von einem am Hauptrahmen angeordneten Hilfsrahmen getragen und durch Ausleger schwenkbar abgestützt. Zur Halterung der Ausleger dienen Bolzen, die sich zur Demontage der Konditioniereinrichtung herausziehen lassen. Eine Schwadformungseinrichtung ist nicht vorgesehen.

Der Erfindung liegt die Aufgabe zugrunde, eine Mähmaschine der eingangs genannten Art dahingehend zu verbessern, daß sie sich zwischen den Betriebsweisen: Konditionieren oder Schwadformen einfach, d.h. ohne großen Werkzeugaufwand, und schnell umstellen läßt.

Diese Aufgabe wird erfindungsgemäß durch die im kennzeichnenden Teil des Patentanspruchs 1 angegebenen Merkmale gelöst.

Bei dieser Ausbildung läßt sich die Konditioniereinrichtung rasch abnehmen und durch die Schwadformungseinrichtung ersetzen, so daß das geschnittene Futter dann ohne Konditionierung in einem Mittenschwad abgelegt wird. Die Schwadformungseinrichtung wird mit ihren Befestigungsteilen anstelle der Konditioniereinrichtung in denselben Lagern in einer genau fixierten Stellung durch die Schnellverschlüsse festgelegt. Das Lösen der Schnellverschlüsse zum Umstellen der Mähmaschine ist einfach und rasch durchführbar.

Vorteilhafte Ausführungsformen gehen aus den Unteransprüchen hervor.

Im folgenden wird die Erfindung anhand der Zeichnung näher erläutert, in der ein vorteilhaftes Ausführungsbeispiel dargestellt ist. Es ziegen:

Figur 1 eine Draufsicht auf eine erfindungsgemäße Mähmaschine;

Figur 2 einen Schnitt entlang der Linie A—A von Figur 1 und

Figur 3 einen Schnitt entlang der Linie B—B von Figur 2.

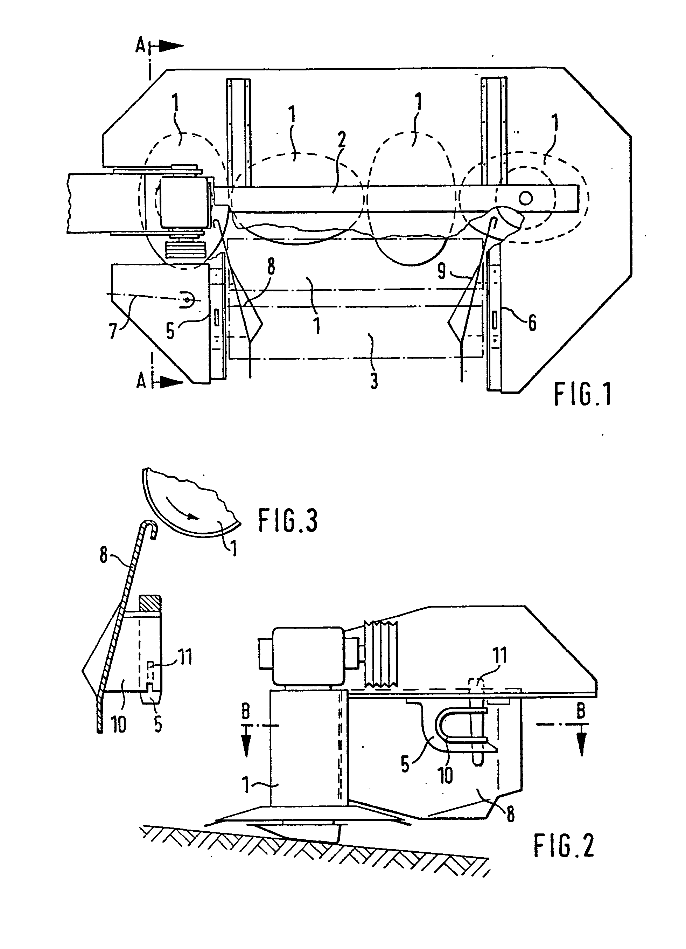

In Figur 1 ist schematisch eine Mähmaschine mit vier Mähkreiseln 1 dargestellt, wobei jeweils zwei benachbarte Mäscheiben 1 gegensinnig zueinander angetrieben werden. Die Mähkreisel sind an einem Tragbalken angeordnet, der mit dem Dreipunktgestänge eines nicht dargestellten Schleppers verbunden ist. Figur 1 zeigt ferner, daß in Fahrtrichtung der Maschine gesehen hinter den Mähkreiseln 1 eine Konditioniereinrichtung 3 in Form von zwei gestrichelt dargestellten Konditionierwalzen angeordnet ist und zwar in zwei Taschenlagern 5, 6, die die Form eines liegenden U aufweisen.

Figur 2 zeigt eines dieser Taschenlager 5 in Seitenansicht, wobei das offene Ende des Lagers durch einen Spannkeil 11 verschlossen wird. Nach Lösen der beiden Spannkeile für die Taschenlager 5, 6 kann die Konditioniereinrichtung 3 von der Mähmaschine abgenommen werden. Um nun beim täglichen Grünfutterholen einen Schwad hinter der Mähmaschine auszubilden, werden nun zwei Schwadformer 8, 9 an der Mähmaschine befestigt, und zwar in den Taschenlagern 5, 6. Zu diesem Zweck weist jeder Schwadformer 8, 9 an seiner Außenseite, d.h. der dem zu bildenden Schwad abgewandten Zeite ein taschenförmiges Befestigungsblech 10 (Figur 2) auf, das an die Form des zugehörigen Taschenlagers 5 derart angepaßt ist, daß es spielfrei in dieses Taschenlager eingeschoben wird. Nach Einschieben der beiden Befestigungsbleche in die beiden Taschenlager 5, 6 wird wieder der Spannkeil 11 eingetrieben, der damit die Schwadformer 8, 9 festhält (Figur 3).

Für die Montage und Demontage ist also nur ein beliebiges Schlagwerkzeug erforderlich. Die Umstellung von Mähen mit Konditionieren auf das Mähen mit einfacher Schwadablage ist in kürzester Zeit möglich. Das bisher erforderliche langwierige Abschrauben der Taschenlager und Anschrauben der Schwadbleche ist nicht mehr erforderlich, so daß die Umrüstzeit auf ein Minimum reduziert ist.

## Patentansprüche

1. Mähmaschine, mit einem Tragbalken für mindestens zwei gegenläufig drehbare Mähwerke (1), mit einer mittels Befestigungsteilen in Fahrtrichtung hinter den Mähwerken (1) mit dem Tragbalken verbundenen Kontitioniereinrichtung (3), mit einer Schwadformungseinrichtung (8, 9), mit zum wahlweisen Haltern der Konditioniereinrichtung (3) oder der Schwadformungseinrichtung (8, 9) an der Mähmaschine fest installierten Lagern (5, 6), wobei die Schwadformungseinrichtung (8, 9) in die Lager (5, 6) passende Befestigungsteile (10) aufweist und anstelle der Konditioniereintichtung (3) mit ihren Befestigungsteilen (10) in die Lager (5, 6) einsetzbar ist, dadurch gekennzeichnet, daß die jeweiligen Befestigungsteile (10) der Konditioniereinrichtung (3) oder der Schwadformungseinrichtung (8, 9) durch Schnellverschlüsse (11) in den Lagern (5, 6) festlegbar sind, daß jedes Lager (5, 6) ein Taschenlager in der Form eines liegenden U's ist, das entgegen der Fahrtrichtung nach hinten offen ist, daß jeder Befestigungsteil (10) der Schwadformungseinrichtung (8, 9) ein taschenförmiges Befestigungsblech ist, und daß der Schnellverschluß (11) einen Spannkeil aufweist, der durch das Taschenlager und das Befestigungsblech steckbar ist.

2. Mähmaschine nach Anspruch 1, dadurch gekennzeichnet, daß die Schwadformungseinrichtung (8, 9) aus zwei getrennten Schwadformern besteht, deren jeder ein Befestigungsblech trägt.

3. Mähmaschine nach den Ansprüchen 1 und 2, dadurch gekennzeichnet, daß jedes taschenförmige Befestigungsblech eine Länge aufweist, mit der es — bei eingesetztem Spannkeil — den Spannkeil annähernd vollständig umfaßt.

## Revendications

1. Machine moissonneuse avec une poutre porteuse pour au moins deux mécanismes faucheurs contrarotatifs (1), avec un système conditionneur (3) relié au moyen d'éléments de fixation à la poutre porteuse derrière les mécanismes faucheurs (1) dans le sens de déplacement, avec un système formeur d'andains (8, 9), avec des paliers (5, 6) fixement installés sur la moissonneuse pour supporter sélectivement le système conditionneur (3) ou le système formeur d'andains (8, 9), le système formeur d'andains (8, 9) comportant des éléments de fixation (10) s'ajustant dans les paliers (5, 6) et pouvant être monté par ses éléments de fixation (10) dans les paliers (5, 6) à la place du système conditionneur (3), caractérisée en ce que les éléments de fixation respectifs (10) du système conditionneur (3) ou du système formeur d'andains (8, 9) sont immobilisables par des dispositifs de fermeture rapide (11) dans les paliers (5, 6), en ce que chaque palier (5, 6) est un palier à poche sous la forme d'un U couché qui est ouvert vers l'arrière à l'opposé du sens de roulement, en ce que chaque élément de fixation (10) du système formeur d'andains (8, 9) est une tôle de fixation en forme de poche et en ce que le dispositif de fermeture rapide (11) comporte un coin de serrage qui est insérable dans le palier à poche et dans la tôle de fixation.

2. Moissonneuse selon la revendication 1, caractérisée en ce que le système formeur d'andains (8, 9) consiste en deux formeurs d'andains séparés dont chacun porte une tôle de fixation.

3. Moissonneuse selon les revendications 1 et 2, caractérisée en ce que chaque tôle de fixation en forme de poche présente une longueur par laquelle, avec coin de serrage monté, elle entoure approximativement entièrement le coin de serrage.

## Claims

1. Mower, comprising a supporting bar for at least two contra-rotatable mower elements (1); a conditioning means (3) which is connected to the supporting bar behind the mower elements (1), when viewed with respect to the direction of travel, by means of securing members; a swath forming device (8, 9); bearings (5, 6) which are securely installed on the mower for selectively supporting the conditioning means (3) or the swath forming device (8, 9); the swath forming device (8, 9) having securing members (10), which fit into the bearings (5, 6), and being insertable into the bearings (5, 6) instead of the conditioning means (3) which also has securing members (10), characterised in that the respective securing members (10) of the conditioning means (3), or of the swath forming device (8, 9), are securable in the bearings (5, 6) by means of quick-action closures (11), each bearing (5, 6) is a pocket-like bearing in the form of a horizontal U, which is open rearwardly in a direction opposite that of the direction of travel, each securing member (10) of the swath forming device (8, 9) is a pocket-like securing plate, and the quick-action closure (11) has a chucking wedge, which is insertable through the pocket-like bearing and the securing plate.

2. Mower according to claim 1, characterised in that the swath forming device (8, 9) includes two separate swath formers, which are provided with a securing plate.

3. Mower according to claims 1 and 2, characterised in that each pocket-like securing plate has a length whereby it almost completely surrounds the chucking wedge — if a chucking wedge has been inserted.

FIG.1

FIG.3

FIG.2